# EUROPEAN PATENT SPECIFICATION

(11) **EP 3 622 829 B1**
(45) Date of publication and mention of the grant of the patent: **28.04.2021**
(21) Application number: 19197598.6
(22) Date of filing: 13.01.2016
(51) Int. Cl.: A23L 7/10, A23L 7/117, A23L 7/135, A23L 7/143

(54) **FROZEN READY-MADE POLENTA AND PROCESS FOR THE PREPARATION THEREOF**
GEFRORENE FERTIGPOLENTA UND VERFAHREN ZUR HERSTELLUNG DAVON
POLENTA PRÉPARÉE SURGELÉE ET SON PROCÉDÉ DE PRÉPARATION

(30) Priority: 14.01.2015 IT MI20150025
(43) Date of publication of application: 18.03.2020
(62) Divisional of application: 16150997.1
(73) Proprietor: Zini Prodotti Alimentari S.p.A., 20090 Cesano Boscone (Milano) (IT)
(72) Inventor: VEZZANI, Maurizio, 20090 Cesano Boscone (Milano) (IT)
(74) Representative: Ferreccio, Rinaldo

(56) References cited:
- EP-A2- 1 142 488
- WO-A1-01/08499
- FR-A3- 2 550 062
- US-A- 3 212 904
- US-A- 5 225 224
- US-B1- 6 419 973

## Description

### Field of application

The present invention relates, in general, to the food industry sector. In particular, the invention relates to a frozen ready-made polenta and to a method for the preparation of a soft polenta using the frozen ready-made polenta.

### Prior art

Polenta is a typical Italian dish which is prepared from a mixture of corn meal and water, and optionally milk, butter and/or cheese, which is boiled while stirring to form a cooked viscous mixture. Traditionally, it is cooked in a large-size pot for at least one hour with frequent mixing so as to allow complete gelatinization of the corn starch.

Traditionally, it is served boiling hot in the form of a viscous mixture (or "soft polenta"), together with a meat, fish or cheese-based topping or side dish, for example stewed beef arranged on top of or alongside the polenta. Since it solidifies slightly whilst cooling during consumption, polenta may be eaten with a fork.

Alternatively, according to more modern recipes, immediately after cooking, the polenta may be left to cool in deep containers, where the polenta solidifies and may be then sliced and grilled, baked in the oven or fried, and served, among the many options, with gravies, sauces, or cheese, fish and/or meat-based toppings or side dishes.

Some traditional polentas comprise not only corn meal but also buck wheat flour (so-called "polenta taragna").

Many variations compared to the basic recipe for the preparation of polenta are possible and even traditionally recognized, these comprising for example the presence of condiments, such as mushrooms, fish or cheeses which are directly mixed into the viscous polenta mixture and/or the presence in the polenta of meal from cereals other than corn instead of or in addition to the corn meal.

The traditional method of preparing polenta as described above has the drawback that it may be very long and laborious, and also poses problems in terms of safety owing to the need to handle, especially in the case of catering services, large amounts of boiling hot water. For these reasons also, alternative solutions have for some time been available on the market.

An example of such a solution is instant polenta, which consists of a dehydrated precooked polenta powder. It may be rehydrated in a few minutes with the addition of water, milk and/or any other desired ingredient.

However, this solution has the drawback that it is relatively laborious, since it requires at least the addition of water and/or other ingredients and a certain mixing time for preparation thereof.

Moreover, the preparation of this product involves, once again, having to work with boiling hot water which, especially in the case of catering services, may consist of a large quantity, thus giving rise to safety-related problems.

Another example of an existing product consists of deep-frozen shaped pieces of polenta. These pieces are available in sizes which typically range from 5 to 10 cm as regards their larger dimension and may have various shapes, for example triangular, circular, square, star-shaped and other shapes. In many cases, these products are available on the market with a topping or side dish of vegetables, cheeses or meat, for example in the form of separate deep-frozen pieces which form part of the same packaging.

However, this latter type of product does not constitute an exact equivalent of the soft polenta described above but, on the contrary, it is intended that the pieces of polenta should maintain their given form when they are heated (in an oven or pan) and served.

Larger blocks of ordinary refrigerated or frozen polenta are also available, these having dimensions for example of 15 cm x 8 cm x 3 cm, or a tubular shape (for example 15 cm long), for example with a diameter of 5 cm, and being sliced and eaten for example after grilling or baking in an oven. In this case also, it is envisaged that the polenta remains solid and that it does not become a homogeneous, soft or semi-fluid mixture comparable to that of a traditional soft polenta.

This latter product, which has fairly large dimensions, when refrigerated, has the drawback that it cannot be stored for a long time and must therefore be eaten within a few days.

Moreover, in order to be able to ensure a certain storage time, the refrigerated product usually comprises at least one additive, such as an acidity corrector having the function of prolonging the conservation times. The acidity corrector may be, for example, an organic acid chosen from among malic, fumaric, lactic and tartaric acid and is preferably tartaric acid. The presence of additives, however, constitutes a drawback compared to traditional polenta in the eyes of the discerning user who wishes to purchase genuine products.

In the frozen version, the product also has the drawback that it must be allowed to thaw (or at least defrosted) completely before being sliced up, with the result that it is not very practical and is time-consuming, especially when the quantity of polenta required in a particular case is a fraction of the entire block. Moreover, any attempt to defrost the block from the frozen state more quickly than required, will adversely affect the quality and the homogeneous character of the polenta's properties. Too rapid heating of the block of polenta will in fact for example result in part of the polenta releasing water and becoming dehydrated, giving it an unpleasant and unbalanced taste.

It should be underlined that the pieces of frozen polenta which are shaped or formed into blocks as described above, even if heated with stirring, cannot usually be converted into a traditional soft polenta owing to the fact that the starch in these products has undergone significant retrogradation such that, even with the addition of water, they are not suitable for producing a soft semi-fluid polenta with a homogeneous consistency.

Retrogradation of the starch is a phenomenon which causes, upon cooling of the gelatinized starch, realignment of the amylose and amylopectin chains of the starch so as to form a new crystal structure (compared to the native starch), with expulsion of the water molecules.

Moreover, the optional presence of lipids in the frozen polenta according to the prior art (for example if cheeses are added to the recipe) may give rise to the undesirable phenomenon of phase separation at the time of defrosting, which may negatively influence the organoleptic properties of the polenta.

In this regard, there are known in the art some procedures for the preparation of a precooked polenta, to be readily heated and consumed by the end users, with the aim to reproduce as much as possible the organoleptic features of a fresh home made polenta.

US5225224 describes a process for the preparation of solid food products from grains and, having a high moisture content. The food products are extruded or molded into desired shapes which are readily microwaved or heated in conventional ovens. In both cases the final products are obtained ready to eat by a process that encompasses a frying step, performed by the producer before the frozen treatment or by the end user at the moment of need.

US6419973 and WO 2001008499 refer to a particular type of French fry product adapted for initial preparation by forming, parfrying and freezing. Particularly, there are disclosed French fry strips formed from a corn based dough, characterized in having a corn snack taste in combination with an overall texture and appearance simulative of conventional potato-based French fry strips.

EP1142488 relates to a continuous process for the production of precooked cornmeal comprising the subsequent sieving, precooking and particle size selecting steps. Before the precooking step, the cornmeal is divided into two portions, wherein the first portion is subjected to precooking in the presence of water vapor whereas the second portion is subjected to precooking in the presence of water vapor and hot water. Said first and second portion are brought together before said particle size selecting step.

In the light of the drawbacks mentioned there is therefore the need to provide a ready-made polenta which is easy to use and which may be prepared in little time so as to produce a soft and semi-fluid polenta which has the organoleptic properties and the composition of a traditional fresh polenta (namely one which has just been prepared) and which does not require, for this reason, the addition of water or any other ingredient. There is also the need for a process for the production of the aforementioned ready-made polenta which is particularly versatile and is easy to implement, substantially without encompassing particular cooking steps, such as frying or similar.

At the same time there is also the need to provide a ready-made soft polenta which is easy to use as described above, does not require the addition of water or any other ingredient and further does not require stirring during the time needed to thaw and/or heat the polenta.

Also there is the need to provide an easy-to-use ready-made soft polenta as described above, which does not contain any additives.

### Summary of the invention

The present invention is defined by the claims. The aforementioned requirements are satisfied according to the invention by a frozen ready-made polenta in the form of frozen granules or flakes with a greater dimension comprised between 1 and 60 mm and having an average weight of 6.0 g or less, substantially homogeneous in size, said granules or flakes being able to be thawed and/or heated rapidly and uniformly to produce a soft polenta having the texture and organoleptic characteristics of a freshly cooked polenta.

For the sake of clarity, it is highlighted that a polenta is a food aliment with unique features in terms, for instance, of taste, flavour and versatility of use, to such an extent that it has a very distinctive nature, compared to any other corn meal derivatives. Analogously, the preparation of a polenta product, requires just few and an affordable steps (like the mixing of the ingredients in water and the hot cooking), that render said product particularly appealing and very easy to make.

The term "polenta" is understood as meaning here a cooked viscous mixture as known by the skilled in the art, based on cereal meal which contains at 20%, by weight relative to the total weight of the polenta, of cereal meal. Polenta is most commonly based on corn meal but, for the purposes of the present invention, the term comprises a cooked viscous mixture based on a cereal meal prepared from any cereal or combination of cereals which is suitable for producing a final product comparable in terms of consistency and use to a polenta based on corn meal.

The term "traditional polenta", "traditional type polenta", "fresh prepared traditional polenta" or "soft polenta" is understood as meaning here more particularly a polenta which has a soft (or semi-fluid) consistency at a temperature of about 65°C or higher and which has organoleptic characteristics comparable to those of a soft polenta cooked according to the traditional method. The term is used in the present application to exclude explicitly shaped - and therefore non-fluid - polenta, as described above, which is suitable for being grilled or cooked directly and which retains its given shaped when eaten.

In particular, the term "soft polenta" according to the present invention is intended to indicate a polenta having, at about 85°C, a dynamic viscosity of 13.000 - 17.000 Pa.s, preferably about 15.000 (Pa.s), measured with a rotational coaxial-cylinder rheometer. Moreover, at the specified temperature, the polenta has a relative moisture of 70-80%. Moreover, such a polenta is characterized in that it has optimum organoleptic properties. Moreover, the polenta to which reference is made has a pH comparable to that of a traditional fresh polenta, namely comprised between 6.0 and 7.0.

The term "ready-made" is understood as meaning here that the polenta according to the present invention does not require additional ingredients for preparation thereof or for being served. The term "ready-made" means also that the granules or flakes of frozen ready-made polenta according to the invention may be thawed and/or heated, for example in a pan or in a microwave oven in less than five minutes. It is not strictly necessary to stir the polenta during heating. Even further, it is noticed that no frying or additional laborious steps are required for the realization of the present invention, differently from some prior art procedures, where additional frying or assembling steps are needed.

The expression "greater dimension" is understood as meaning here that, when the granule or flake does not have a substantially round form, it refers to the larger dimension from among length, width and thickness of the granule or flake, the other dimensions being the same or smaller. When the granule or flake has a substantially spherical shape, it refers to the diameter of the granule or flake.

The term "granule" is understood here as meaning a small-size object with an irregular shape and indefinite, preferably substantially spherical, stick-like or pellet-like form.

The term "flake" is understood here as meaning a small-size flat and thin object.

The aforementioned frozen ready-made polenta according to the invention comprises, by weight relative to the total weight of the polenta, 20-30% of a cereal meal, 70-80% water and 0-3% salt.

The frozen ready-made polenta according to the invention may comprise one or more ingredients selected from the group comprising dairy products (for example milk, butter, cream, cheese), meat, fish, vegetables, fruits, cereal grains, spices, flavouring, aromatic herbs and the like.

Preferably, the aforementioned cereal meal is selected from the group which comprises corn meal, wheat, oats, barley, millet, sorghum, buckwheat and mixtures thereof, more preferably corn.

Preferably, the aforementioned cereal meal comprises, by weight relative to the total dry weight of the cereal meal, at least 50% more preferably at least 70%, even more preferably at least 90% and most preferably 100% of corn meal.

Advantageously, the aforementioned cereal meal may be finely or roughly ground and may be whole, refined or partially refined, or a combination of these.

Preferably, the aforementioned granules or flakes have an average weight less than 5.0 g, more preferably less than 4.0 g, and even more preferably less than 3.0 g.

Preferably, the aforementioned granules or flakes have the greater dimension, more preferably all the dimensions, comprised between 1 and 40 mm, more preferably between 1 and 30 mm, and even more preferably between 1 and 15 mm.

Advantageously, the granules or flakes according to the present invention are characterized by a significant porosity.

Preferably, the aforementioned granules or flakes have a pH comprised between 6.0 and 7.0 and more preferably equal to 6.6.

Preferably, the aforementioned granules or flakes do not include preservatives.

Preferably, the time for thawing and/or heating a portion of the frozen ready-made polenta, for example in a microwave oven, is less than 5 minutes, and more preferably less than 4 minutes.

A portion is defined here as being about 400 g of frozen polenta.

Following thawing and heating, the polenta according to the present invention has at about 85°C a dynamic viscosity of 13.000-17.000 Pa.s, preferably about 15.000 Pa.s, measured with a rotational coaxial-cylinder rheometer. Moreover, at the specified temperature, it has a relative moisture of 70-80%. Those features contribute to give to the present polenta a soft physical form, so that it can be defined to be a soft polenta, namely having a fluid and creamy appearance, particularly appreciated by the end user.

The aforementioned requirements are satisfied by a process for the production of a frozen ready-made polenta in the form of granules or flakes, comprising the steps of:
a) providing a traditional soft polenta at a temperature of about 40°C or higher;
b) dividing the polenta into a plurality of semifinished products in the form of granules or flakes;
c) performing a first step of deep-freezing the aforementioned semifinished products by supplying them in dosed amounts into a bath of a liquid at a temperature of -30°C or lower and keeping them in said bath for a first predetermined time interval, thus obtaining a plurality of partially deep-frozen granules or flakes of the aforementioned polenta, the aforementioned partially deep-frozen granules or flakes having a hard and deep-frozen external surface and a soft not completely deep-frozen core;
d) subjecting for a predetermined second time interval the aforementioned plurality of partially deep-frozen granules or flakes of polenta to a second deep-freezing step at a temperature comprised between -30°C and -90°C, preferably between -50°C and -70°C, thus obtaining a plurality of deep-frozen granules or flakes.

The aforementioned traditional soft polenta of step a) has organoleptic properties which are optimal compared to those of a polenta cooked according to the traditional method.

The aforementioned frozen traditional polenta comprises, by weight relative to the total weight of the polenta, 20-30% of a cereal meal, 70-80% water and 0-3% salt.

Preferably, the aforementioned traditional polenta further comprises one or more ingredients selected from the group comprising dairy products (for example milk, butter, cream, cheese), meat, fish, vegetables, fruits, cereal grains, spices, flavouring, aromatic herbs and the like.

Preferably, the aforementioned cereal meal is selected from the group which comprises corn meal, wheat, oats, barley, millet, sorghum, buckwheat and mixtures thereof, more preferably corn.

Preferably, the aforementioned cereal meal comprises, by weight relative to the total dry weight of the cereal meal, at least 50% more preferably at least 70%, even more preferably at least 90% and most preferably 100% of corn meal.

Advantageously, the aforementioned cereal meal may be finely or roughly ground and may be whole, refined or partially refined, or a combination of these.

The aforementioned traditional soft polenta of step a) has at about 85°C a dynamic viscosity of 13.000-17.000 Pa.s, preferably about 15.000 Pa.s, measured with a rotational coaxial-cylinder rheometer. Moreover, at the specified temperature, it has a relative moisture of 70-80%.

Preferably, the aforementioned traditional soft polenta of step a) has a pH comprised between 6.0 and 7.0, and more preferably of 6.6. Preferably, the aforementioned traditional soft polenta of step a) does not include preservatives.

Preferably, the aforementioned traditional soft polenta of step b) is divided into a plurality of semifinished products in the form of flakes or granules at a temperature comprised between 30°C and 80C°.

The aforementioned semifinished products have the greater dimension comprised between 1 and 60 mm, preferably comprised between 1 and 40 mm, more preferably comprised between 1 and 30 mm, and most preferably comprised between 1 and 15 mm.

Preferably, the aforementioned first time interval has a duration comprised between 10 seconds and 90 seconds, more preferably between 10 seconds and 60 seconds, even more preferably between 15 seconds and 30 seconds.

Preferably, the aforementioned second time interval has a duration comprised between 30 seconds and 210 seconds, more preferably between 30 seconds and 150 seconds, and even more preferably between 45 seconds and 120 seconds.

Preferably, the aforementioned first time interval of the first deep-freezing step is less than the aforementioned second time interval of the second deep-freezing step.

In one embodiment, the aforementioned phase liquid c) is nitrogen and has a temperature comprised between -197°C and -150°C.

In another embodiment, said liquid of step c) is carbon dioxide and has a temperature comprised between -78°C and -30°C.

The aforementioned deep-frozen granules or flakes of polenta have an average weight of 6.0 g or less, more preferably less than 5.0 g, even more preferably less than 4.0 g and most preferably less than 3.0 g.

The aforementioned deep-frozen granules or flakes obtained have a greater dimension comprised between 1 and 60 mm, preferably comprised between 1 and 40 mm, more preferably comprised between 1 and 30 mm, and most preferably comprised between 1 and 15 mm.

Preferably, the aforementioned step d) is followed by a step e) of subjecting the deep-frozen granules or flakes thus obtained to a refining step, in which at least some of the deep-frozen granules or flakes are reduced in size.

Preferably, in the aforementioned step e) at least some of the plurality of deep-frozen granules or flakes are reduced in size, thus obtaining a plurality of deep-frozen granules or flakes having an average weight equal to or less than 5.0 g, more preferably less than 4.0 g, and even more preferably less than 3.0 g, being substantially homogeneous in size, the greater dimension being comprised between 1 mm and 40 mm, more preferably between 1 mm and 30 mm, and even more preferably between 1 mm and 15 mm.

Preferably, said step d) is followed by a step of packaging the aforementioned polenta in the form of deep-frozen granules or flakes.

The aforementioned deep-frozen granules or flakes of polenta comprise, by weight relative to the total weight of the polenta, 20-30% cereal meal, 70-80% water and 0-3% salt.

Preferably, the aforementioned deep-frozen granules or flakes of polenta further comprise one or more ingredients selected from the group comprising dairy products (for example milk, butter, cream, cheese), meat, fish, vegetables, fruits, cereal grains, spices, flavouring, aromatic herbs and the like.

Preferably, the aforementioned cereal meal is selected from the group which comprises corn meal, wheat, oats, barley, millet, sorghum, buckwheat and mixtures thereof, more preferably corn.

Preferably, the aforementioned cereal meal comprises, by weight relative to the total dry weight of the cereal meal, at least 50% more preferably at least 70%, even more preferably at least 90% and most preferably 100% of corn meal. Advantageously, the aforementioned cereal meal may be finely or roughly ground and may be whole, refined or partially refined, or a combination of these.

According to another aspect of the invention, the aforementioned requirements are satisfied by a process for the production of a frozen ready-made polenta in the form of granules or flakes according to the invention, wherein:
- the step b) of dividing the polenta into a plurality of semifinished products in the form of granules or flakes is performed by means of a dosing device;
- the step c) of performing a first step of deep-freezing the aforementioned semifinished products so as to obtain a plurality of partially deep-frozen granules or flakes of the aforementioned polenta is performed in a first deep-freezing section arranged downstream of the aforementioned dosing device, comprising a bath of a liquid kept at a temperature of -30°C or less into which the aforementioned semifinished products of the aforementioned polenta are fed and from which the aforementioned partially deep-frozen granules or flakes of polenta having a frozen and hard external surface and a soft, not completely frozen core are discharged;
- the step d) of subjecting for a predefined second time interval the aforementioned plurality of partially deep-frozen granules or flakes of polenta to a second deep-freezing step, thus obtaining a plurality of deep-frozen granules or flakes, is performed in a second deep-freezing section arranged downstream of the aforementioned first deep-freezing section, which operates at a temperature comprised between -90°C and -30°C, preferably between -70°C and -50°C, and into which the aforementioned partially deep-frozen granules or flakes of polenta exiting from the aforementioned first deep-freezing section are fed and from which deep-frozen granules or flakes of polenta are discharged.

Preferably, the aforementioned dosing device is a device suitable for the formation of the aforementioned semifinished products in the form of granules or flakes, preferably comprising a perforated or slotted plate or a grille advantageously arranged horizontally above the aforementioned first deep-freezing section, through which the polenta is fed into the aforementioned first deep-freezing section.

Preferably, the aforementioned perforated plate or grille comprises holes or openings having a diameter or greater dimension comprised between 1 and 60 mm, more preferably comprised between 1 and 40 mm, even more preferably comprised between 1 and 30 mm, and most preferably comprised between 1 and 15 mm.

Preferably, the aforementioned slotted plate comprises openings with a width comprised between 1 and 3 mm, preferably 2 mm, and length comprised between 1 and 60 mm, more preferably 1 and 40 mm, even more preferably between 1 and 30 mm, and most preferably between 1 and 15 mm.

Preferably, the aforementioned dosing device also comprises means for stirring and distributing the aforementioned polenta or means for applying a pushing force to the aforementioned polenta, consisting for example of pumps.

Preferably, the aforementioned first deep-freezing section comprises a bath of liquid nitrogen at a temperature comprised between -197°C and -150°C or carbon dioxide at a temperature of between -78°C and -30°C.

Preferably, the aforementioned liquid bath comprises a tank containing a body of liquid nitrogen or carbon dioxide.

Preferably, the aforementioned second deep-freezing section comprises a tunnel at least partly passed through by conveyor means.

Preferably, the aforementioned step e) of subjecting the deep-frozen granules or flakes obtained to a refining step, in which at least some of the deep-frozen granules or flakes are reduced in size, is performed in a refining or forming device arranged downstream of the aforementioned second deep-freezing section.

Preferably the aforementioned refining device comprises a screw feeder, and more preferably comprises a perforated plate or grille removably associated with a terminal end of the aforementioned screw feeder.

Preferably, the aforementioned perforated plate or grille associated with the screw feeder comprises holes or openings with a square cross-section, preferably having a width comprised between 1 mm and 40 mm.

Preferably, the aforementioned packaging step is performed in a device for packaging the aforementioned polenta in the form of deep-frozen granules or flakes, which is arranged downstream of the aforementioned second deep-freezing section.

Preferably, conveyor means are provided for conveying the aforementioned polenta in the form of partially deep-frozen granules or flakes from the first deep-freezing section to the second deep-freezing section. Preferably means are also provided for conveying the polenta in the form of deep-frozen granules or flakes from the second deep-freezing section to the packaging device or to the refining device.

Preferably, the aforementioned conveyor means comprise at least one conveyor belt partially immersed in the liquid bath. Preferably, the conveyor means may be arranged in series with and/or parallel to each other.

Preferably, the aforementioned traditional soft polenta according to step a) is prepared by means of a process comprising the step of providing a polenta pre-mix and subjecting the aforementioned polenta pre-mix to a centrifugation step with the consequent formation of a turbulent and dynamic thin layer at a predetermined temperature for the time required for the polenta pre-mix to cook.

Preferably, the aforementioned traditional soft polenta is prepared by means of a process comprising the steps of:
- continuously feeding a polenta pre-mix into a turbo-cooker comprising a horizontal-axis cylindrical tubular body, having at least one inlet opening for said polenta pre-mix and a discharge opening for the final product (cooked polenta), the inner wall of the aforementioned tubular body being at a predetermined temperature and a bladed rotor being rotatably supported in the cylindrical tubular body;
- subjecting the aforementioned polenta pre-mix to centrifugation, so as to form a turbulent and dynamic thin layer, in which the mixture thus formed is kept in a well-stirred condition by the blades of the bladed rotor;
- conveying the aforementioned turbulent and dynamic thin layer towards the discharge opening of the turbo-cooker, causing it to flow in substantial contact with the heated wall of the turbo-cooker for the time required for cooking the polenta pre-mix;
- continuously discharging a flow of polenta from the turbo-cooker.

The aforementioned polenta pre-mix comprises by weight relative to the total weight of the polenta pre-mix: 20-30% cereal meal, 70-80% water and 0-3% salt.

Preferably, the aforementioned polenta pre-mix is formed inside the turbo-cooker by feeding inside it two separate flows, a first flow thereof comprising dry cereal meal and optionally salt and the second flow consisting of water, preferably pre-heated to a temperature comprised between 80 and 100°C, preferably about 85°C.

Preferably, the aforementioned first flow further comprises one or more ingredients selected from the group comprising dairy products (for example milk, butter, cream, cheese), meat, fish, vegetables, fruits, cereal grains, spices, flavouring, aromatic herbs and the like.

Preferably, the turbo-cooker comprises a heating jacket for heating the inner wall of the turbo-cooker to a given temperature.

The inner wall of the turbo-cooker is preferably kept at a temperature comprised between 120 and 170°C, more preferably between 140 and 150°C, and most preferably 145°C.

Preferably, the bladed rotor of the turbo-cooker is rotationally operated at a peripheral speed of between 5 and 30 m/s, more preferably between 10 and 25 m/s, and most preferably at 20 m/s.

Preferably, the temperature of the polenta output from the turbo-cooker is comprised between 90 and 100°C.

Preferably, refrigeration means are arranged downstream of the discharge opening of the turbo-cooker in order to cool the aforementioned cooked polenta to a predetermined temperature before it is fed into the aforementioned dosing device.

Preferably, the aforementioned refrigeration means consist of an air or water refrigeration system.

According to another aspect of the invention, the present invention relates to a method for the preparation of a soft polenta having optimum organoleptic properties comparable to those of a traditional polenta, wherein a portion of ready-made polenta in the form of deep-frozen granules or flakes according to the present invention is poured into a container and thawed and/or heated in a microwave oven for a predetermined thawing and/or cooking time, preferably without stirring during the thawing and/or heating time.

According to a further aspect not part the invention, here it is described a method for the preparation of a soft polenta having optimum organoleptic properties comparable to those of a traditional polenta, wherein a portion of frozen ready-made polenta in the form of granules or flakes according to the present invention is poured into a pan and thawed and/or heated on a heat source, for example a plate or burner ring, for a predetermined thawing and/or cooking time, preferably without stirring during the thawing and/or heating time. Of note, and as above remarked, the present method of preparation of a soft polenta does not encompass any frying or laborious steps, so that the final consistence of the polenta is substantially fluid and creamy, just like a traditional soft polenta.

Preferably, the aforementioned time for thawing and/or heating a portion is less than 5 minutes, more preferably less than 4 minutes. Preferably, the aforementioned microwave oven is set to about 800 Watts.

According to a further aspect not part the invention, here it is described a frozen ready-made food packaging for thawing in a microwave oven, comprising a receptacle made of a microwave-permeable rigid material, containing a first frozen food component at the bottom and a second frozen food component having a substantially fluid consistency at a temperature higher than 0°C, and a closure element, wherein said first food component comprises the aforementioned frozen ready-made polenta according to the present invention.

Preferably the aforementioned receptacle is flared, more preferably it has a substantially cup-like form.

Preferably, the aforementioned second food component is a condiment, preferably a sauce having a tomato base, a white base, a sauce based on fat, oil, cheese, mayonnaise, meat, fish, vegetables or a sauce having a mixed base, more preferably a sauce based on tomato.

Preferably, the aforementioned second food component comprises frozen granules of a condiment obtained according to the method described in patent application EP 2 696 706 in the name of the same applicant.

Preferably, the aforementioned closure element comprises a film of plastic material welded onto the edges of the receptacle, preferably provided with perforations.

Preferably, the aforementioned closure element further comprises a lid of rigid plastic material, preferably the same rigid plastic material from which said receptacle is made.

Preferably, the aforementioned plastic material is chosen from the group comprising polypropylene (PP), polyethylene (PE) and polyethylene terephthalate (PET).

Preferably the closure element is made of the same material as the receptacle. The aforementioned closing film is preferably made of a PP/PET composite, the side of the film directed towards the outside of the packaging consisting of PET.

The closing film may also consist of a PE-based multi-layer film containing a layer with oxygen-barrier properties. The material which forms the gas barrier layer may be selected from the group comprising polymers and copolymers of ethylene vinyl alcohol (EVOH), nylon, polyvinylidene chloride (PVDC), poly- or copolyamides and combinations thereof, and metal/silicon oxides. Preferably, the aforementioned material is a polymer or copolymer of ethylene vinyl alcohol or nylon.

In the case where a film or a receptacle with gas-barrier properties is used, the holes present on the closing film are closed by a sealing label or sealing lacquer and they are opened during heating as a result of the temperature and pressure allowing vapour to escape.

Preferably, the aforementioned packaging further comprises a rigid container, preferably made of cardboard, intended to receive and contain the aforementioned flared receptacle with play such as to create a cavity between container and receptacle, along at least the respective side walls.

Basically it has been surprisingly found that by subjecting a traditional polenta to the process according to the present invention, it is possible to obtain deep-frozen granules or flakes of polenta, and in particular substantially homogeneous granules or flakes of predefined weight, size and shape, which advantageously give rise, at the time of use of the polenta, to total flexibility as regards portioning of the polenta, namely the granules or flakes, and at the same time the advantage of a short thawing and/or heating time, while maintaining the organoleptic properties of the polenta both during deep-freezing and during thawing and/or heating thereof.

It has been found that the present deep-freezing process reduces dehydration of the polenta, thus allowing its organoleptic properties and its superficial appearance to be maintained and avoids damage to the cellular structure of the starch grains and reduces retrogradation of the starch. As a result, the hygienic and organoleptic properties of the corresponding traditional polenta are maintained.

The presence of additional food ingredients in the deep-frozen food may give rise to the undesirable phenomenon of phase separation during thawing, especially in the case of ingredients with a high lipid content, such as butter, milk or cheese, which in turn may negatively influence the organoleptic properties of the polenta.

Owing to the dimensions of the polenta granules or flakes and the process for deep-freezing the granules or flakes according to the present invention, the polenta according to the invention is thawed and/or heated up quickly and homogeneously. For this reason, in the case where the polenta contains lipids, no phase separation occurs.

The deep-frozen granules or flakes of polenta according to the invention may have a corrugated surface and be substantially spherical or with an elongate shape in the case of the granules or laminar in the case of flakes and may in any case be characterized by a significant degree of porosity which facilitates or accelerates considerably thawing and/or heating (both direct heating in a pan and in a microwave oven) which moreover occurs homogeneously without the risk of overcooking or burning of parts of the polenta.

As regards in particular thawing and/or heating of the granules or flakes in a microwave oven, it should be emphasized that the frozen ready-made polenta according to the present invention, owing to its composition and the granule or flake dimensions, allows the preparation of a soft polenta which has the optimum organoleptic characteristics of a traditional polenta without having to manipulate the polenta during its thawing and/heating time, for example, inside the microwave oven.

Owing to the process according to the invention, moreover, it is not required to include preservatives in the composition of the polenta. The polenta according to the present invention therefore reproduces, also in terms of composition, the characteristics of traditional soft polenta.

Further characteristic features and advantages of the present invention will emerge from the description, provided hereinbelow, of a number of examples of embodiment provided by way of non-limiting illustration with reference to the accompanying drawings.

### Brief description of the figures

Figure 1 shows in schematic form a plant for the production of frozen ready-made polenta in accordance with an embodiment of the present invention;
Figure 2 shows a turbo-cooker for the continuous preparation of a traditional polenta;
Figure 3a shows a detail of the plant shown in Figure 1, specifically a device for dosing the traditional polenta in accordance with an embodiment of the invention in which the semifinished products are in the form of granules;
Figure 3b shows a detail of the plant shown in Figure 1, specifically a device for dosing the polenta in accordance with an embodiment of the invention in which the semifinished products are in the form of flakes;
Figure 4 shows a detail of the dosing device according to Figure 3, specifically a plurality of perforated or slotted plates in accordance with alternative embodiments of the present invention;
Figure 5 shows a detail of the plant according to Figure 1, specifically a terminal portion of a conveyor belt exiting from a deep-freezing section, particularly a second deep-freezing section for the aforementioned polenta, in accordance with an embodiment of the present invention;
Figure 6 shows a detail of the plant according to Figure 1, specifically a device for refining the aforementioned frozen polenta in order to obtain deep-frozen granules or flakes with predefined dimensions and of predefined weight in accordance with an embodiment of the invention.

### Detailed description of the invention

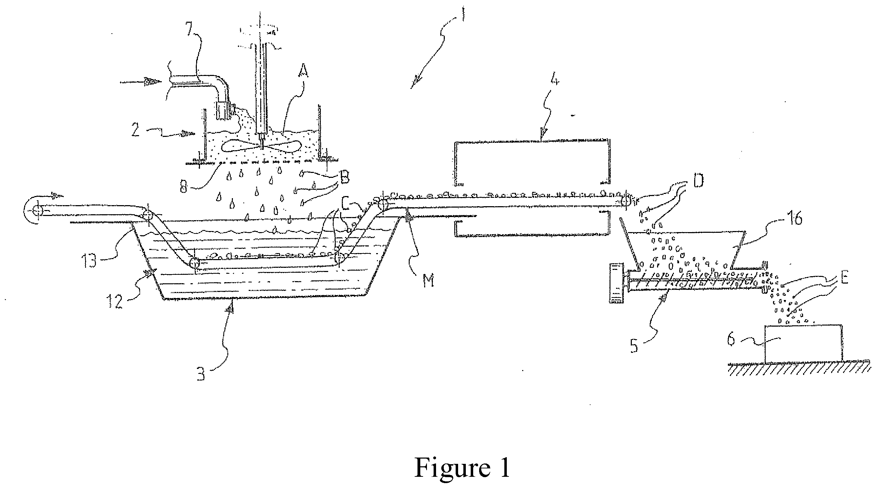

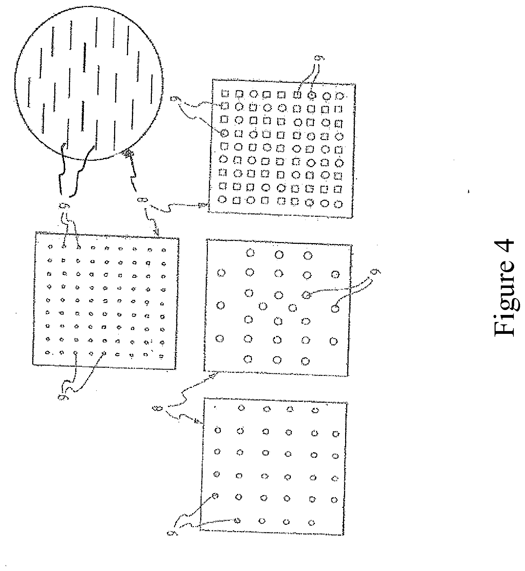

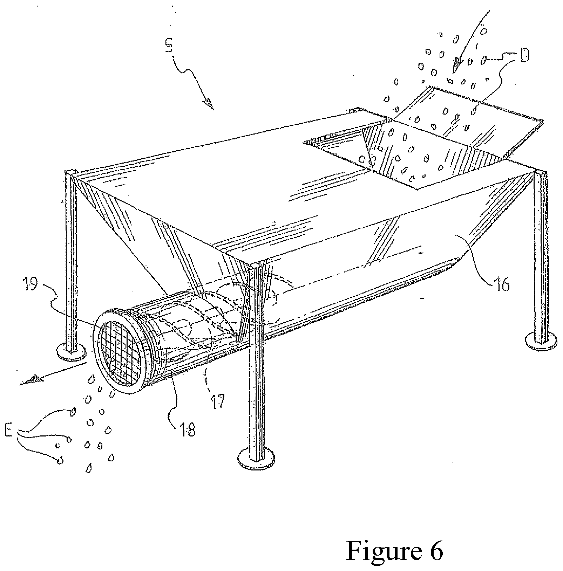

A process for the production of a frozen ready-made polenta in accordance with a preferred embodiment of the present invention is described with reference to Figures 1-6 in which an associated production plant, denoted overall by 1, is shown.

The plant 1 comprises essentially a dosing device or doser 2, a first deep-freezing section 3, a second deep-freezing section 4, a refining or forming device 5 and a packaging device 6, which are arranged in series with each other, and means for conveying the polenta, denoted overall by M.

The doser 2, into which the traditional polenta A is fed by via a pipe 7, preferably at a temperature equal to or higher than about 40°C, comprises essentially a plate 8 provided with a plurality of holes or slots 9 with predefined dimensions on which a cylindrical body 10 is mounted and fixed so as to form substantially a container having a perforated bottom. In particular, in the case where it is required to form semifinished products in granule form the polenta A will be fed to the doser at a temperature of about 60°C. In particular, in the case where it is required to form semifinished products in flake form the polenta A will be fed to the doser at a temperature of about 40°C.

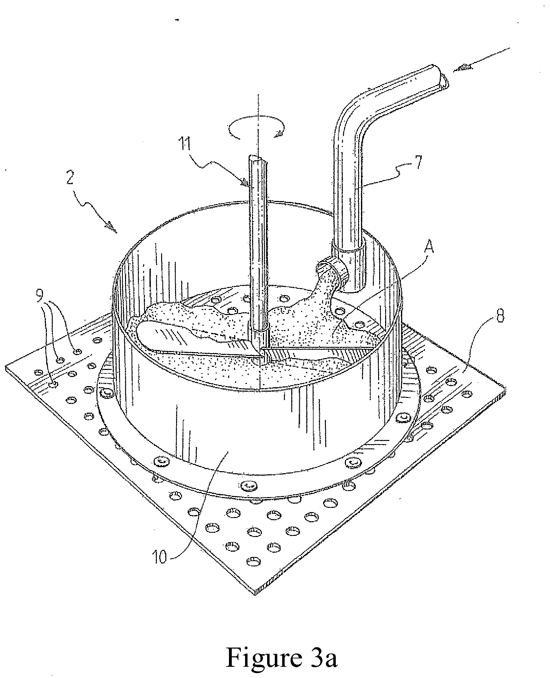

In the example shown in Figure 3a, which relates to the formation of semifinished products in the form of granules, in accordance with a preferred embodiment, the doser 2 also comprises stirring/distribution means - denoted overall by 11 - which comprise rotating blades and facilitate and optimize the distribution of the polenta A on the plate 8 and therefore the passage of the said polenta into the holes 9 and, therefore, the supplying, in dosed amounts, of the polenta into the first deep-freezing section 3 situated underneath, downstream of the doser 2.

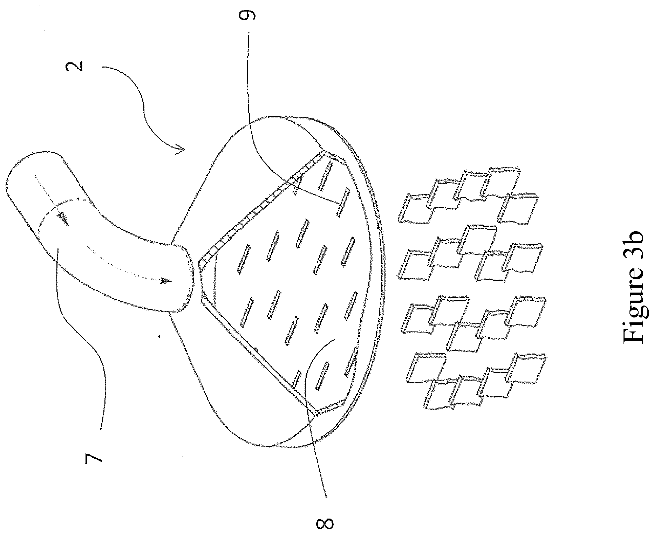

In the example shown in Figure 3b, in accordance with an alternative preferred embodiment, which relates to the formation of semifinished products in the form of flakes, the doser 2 is associated with the polenta inlet pipe 7 so as to facilitate, by means of the application of pressure, the passage of the said polenta into the slots 9 and, therefore, the supplying, in dosed amounts of the polenta into the first deep-freezing section 3 arranged underneath, downstream of the doser 2.

The first deep-freezing section 3 is a section at a particularly low temperature, less than or equal to -30°C. According to the example shown in Figure 1, it comprises essentially a liquid nitrogen bath 12 at a temperature lower than or equal to -150°C, particularly a tank 13 inside which a body of liquid nitrogen is formed at a temperature of about-197°C.

In an alternative embodiment it may comprise a liquid carbon dioxide bath at a temperature of -30°C or lower, particularly a tank in which a body of liquid carbon dioxide is contained. The traditional polenta A is then supplied in dosed amounts into the first deep-freezing section 3 via the plate 8, and in particular semifinished polenta products indicated by B are allowed to fall by means of gravity into the nitrogen bath 12 inside which they remain immersed for a predefined time interval, preferably comprised between 15 and 30 seconds. In the case where the bath is a carbon dioxide bath, this time interval is preferably comprised between 25 and 60 seconds.

Once immersed in the liquid nitrogen bath the semifinished polenta products B are subject, owing to the very low temperature, to a rapid deep-freezing process, and in particular the deep-freezing of the surface layer with the formation of partially deep-frozen granules or flakes of polenta, indicated by C, having a hard and frozen external surface and a soft not completely frozen core.

Then the partially deep-frozen granules or flakes C of polenta exit from the first deep-freezing section 3 and are fed into the second deep-freezing section 4.

The partially deep-frozen granules or flakes C are conveyed from the first deep-freezing section 3 to the second deep-freezing section 4 by means of the aforementioned conveyor means M which, in the embodiment shown in the examples of the figures, comprise a conveyor belt, it however being possible to envisage a system of conveyor belts arranged parallel and/or in series with each other.

For example, in the case of conveyor belts arranged in series, a first conveyor belt may be provided in the first deep-freezing section, and a second conveyor belt may be provided in the second deep-freezing section, said belts being arranged so that the polenta is transferred from the first belt to the second conveyor belt at a point along the plant situated between the two deep-freezing sections. In this way it is possible to regulate, as required, the speed of each conveyor belt and, therefore, the dwell time of the polenta in the respective deep-freezing section, which dwell time may also be determined, independently for the two deep-freezing sections also in the case of a single conveyor belt, depending on the length of the first and second deep-freezing sections.

Considering again the example in Figure 1, a conveyor belt which passes through the first and second deep-freezing sections is provided, namely a conveyor belt which is at least partly immersed in the liquid nitrogen bath 12 of the first deep-freezing section 3 in which the partially deep-frozen granules or flakes C of polenta are collected.

In detail, again as shown in the example of Figure 1, the conveyor means M are immersed in the liquid nitrogen bath 12, by means of at least one liquid bath section, being immersed in the body of liquid nitrogen, and along this section they collect the partially deep-frozen granules or flakes C of polenta, in the sense that the partially deep-frozen granules or flakes descending into the body of liquid nitrogen are deposited on the conveyor means which emerge from the nitrogen bath 12 at one end of the tank 13, transporting the partially deep-frozen granules or flakes C of polenta out from first deep-freezing section 3 and feeding them into the second deep-freezing section 4.

The second deep-freezing section 4 comprises essentially a tunnel provided with inlet and outlet openings at a temperature of between about -90°C and -30°C, preferably between -70°C and -60°C, conveniently about -65°C, where the polenta and in particular the partially deep-frozen granules or flakes C, transported by the conveyor means M, complete the deep-freezing process, preferably in a time interval of between 45 and 120 seconds.

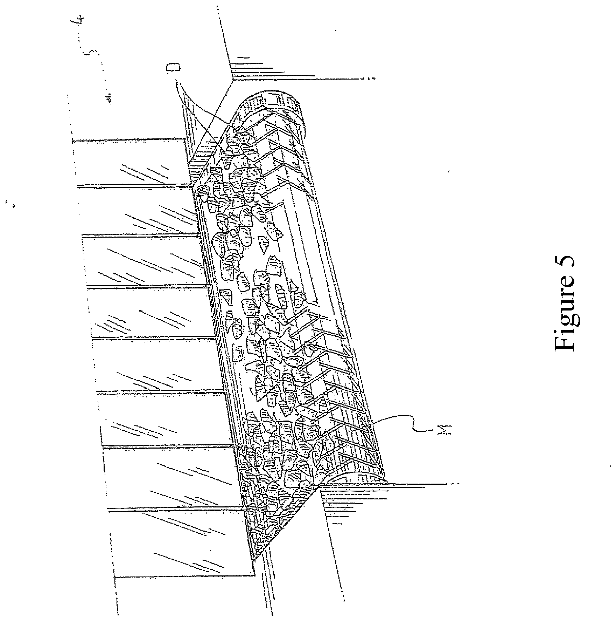

Completely frozen granules or flakes D of polenta are obtained at the outlet of the second deep-freezing section 4, as shown in particular in the example of Figure 5.

Still in accordance with the examples of the figures, the granules or flakes D of polenta are subsequently fed to the refining or forming device 5, in which a respective refining step is performed, namely reduction of the dimensions of at least some of the granules or flakes of polenta D supplied from the second deep-freezing section 4, resulting in the formation of granules or flakes of polenta with predefined dimensions, indicated by E.

The refining device 5, which is basically a granulator, comprises essentially a flared container or tank 16 which contains, at the bottom, a screw 17, preferably with a double spiral, having a section extending beyond the tank 16 and housed inside a tube 18 mounted in the tank 16 so as to form basically a screw feeder which, in accordance with the example shown in the figures, terminates in a grille 19.

The grille 19, which is removably associated with the tube 18, may be chosen on the basis of the predefined and desired grain size for the polenta, and preferably is a grille with perpendicular meshes forming through-holes having an essentially square cross-section with a width of between 1 mm and 40 mm.

The deep-frozen granules D of polenta fed into the tank 16 of the refining unit 5 are transported by the screw 17 towards the grille 19 and, both while passing along the screw and while passing through the meshes of the grille 19, their dimensions are reduced, resulting in the aforementioned granules or flakes E.

Basically the refining or forming step is preferred in the case where it is required to obtain granules or flakes with predefined dimensions and in particular with a homogeneous size and particularly small dimensions, smaller than those of the granules or flakes exiting from the second deep-freezing section, which depend on the holes or passages through the plate or grille of the dosing device.

Moreover, the deep-frozen granules or flakes at the end of the second deep-freezing step may if necessary also take the form of lumps which may result, for example, from aggregation of the semifinished products, partially frozen granules or flakes or frozen granules or flakes of polenta, or which may arise from over-sized semifinished polenta products due, for example, to an excessive fluidity of the said polenta or the optional presence of ingredients with a high-lipid content in the polenta.

In the present process, therefore, the refining process is not envisaged in the case where the deep-frozen granules or flakes of polenta exiting from the second deep-freezing section have an essentially homogeneous and desired size, preferably large dimension of between 1 mm and 40 mm, particularly between 1 and 30 mm, more preferably between 1 and 15 mm, and an average weight equal to or less than about 5.0 g, in particular less than 4.0 g, even more preferably less than 3.0 g, while it is envisaged in the case of granules with a non-homogeneous size or in any case a size greater than that desired, when passing into the screw feeder and optionally, and therefore not necessarily, when the polenta also passes into the grille arranged at the top of the screw feeder.

The deep-frozen granules or flakes of polenta, exiting from the refining device or directly from the second deep-freezing section, are then sent to the packaging device 6 of the known type 6, where they are prepared for storage at a temperature generally of between -20°C and -25°C in packages of the rigid type, such as cardboard boxes and the like, or of the flimsy type such as bag-type packages, for example made of plastic material.

As regards further details of the present invention, it should be added that, in accordance with a preferred embodiment, the nitrogen vapours released in the first deep-freezing section 3 by the liquid nitrogen bath 12 are used to cool the second deep-freezing section 4 where they are conveyed by means of a dedicated pipe or system of pipes, blowers, and vane-type dispersion or directing devices, not shown in the examples of the figures.

In this way the nitrogen vapours from the first deep-freezing section are directed all around the granules or flakes of polenta inside the second deep-freezing section where the deep-freezing process is completed.

Obviously, the same is applicable for the case where there is a carbon dioxide bath. Advantageously, therefore, there is a reduction in the amount of energy needed to keep the second deep-freezing section at the desired temperature since it does not require additional energy for cooling thereof.

Moreover, forming and packaging of the polenta are performed at the temperature of the deep-frozen granules or flakes and, therefore, these steps also do not require the use of energy in order to maintain the process temperature since this is provided exclusively by the frozen polenta itself.

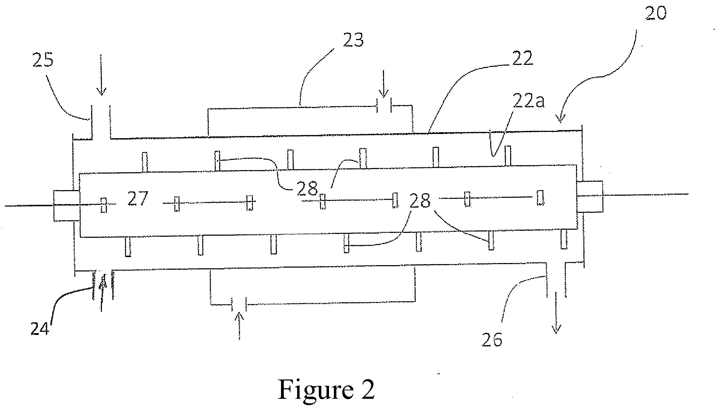

According to another embodiment of the present invention, the process for the production of frozen ready-made polenta includes a process for preparation of the traditional polenta according to step a) of the process of the present invention. This method is described with reference to Figure 2 which shows an associated implementation device, denoted overall by 20.

With reference to Figure 2, a turbo-cooker 20 comprises, essentially, a cylindrical tubular body 22 with a horizontal axis, closed at its opposite ends and provided with a heating jacket 23 for keeping the inner wall 22a of the cylindrical body 22 at a predetermined temperature. Inlet openings for feeding the polenta pre-mix to be processed inside the turbo-cooker 20 are indicated by the numbers 24 and 25 and an outlet opening for discharging the cooked polenta is indicated by the number 26.

In particular, the opening 24 is intended for the entry of a first flow of dry cereal meal and optionally salt, while the opening 25 is intended for the entry of the second flow, consisting of water. The respective flows will be regulated so as to obtain a polenta pre-mix inside the turbo-cooker with the desired moistness.

A bladed rotor 27, operated by a motor, is mounted axially inside the cylindrical tubular body 22, the helically arranged blades 28 thereof having their ends almost making contact with the inner wall 22a of the cylindrical body.

In order to prepare traditional polenta according to step a) of the present invention, according to a preferred embodiment, a flow of cereal meal and optionally salt and a flow of water are fed into the turbo-cooker from the inlet openings 24 and 25, respectively, in order to obtain in the turbo-cooker a polenta pre-mix comprising 20-50% cereal meal, 50-80% water, and 0-3% salt (by weight relative to the total weight of the polenta pre-mix). The cereal meal content is comprised, by weight relative to the total weight of the polenta pre-mix, between 20 and 30%, and the water content is comprised between 70 and 80%.

The turbo-cooker is operated at a temperature of the inner wall comprised between 120 and 170°C, preferably between 140 and 150°C, more preferably of 145°C, and at a peripheral speed of the bladed rotor comprised between 5 and 30 m/s, preferably between 10 and 25 m/s, and more preferably of 20 m/s.

Rotation of the bladed rotor is such that the polenta pre-mix forms a thin layer on the inner wall of the turbo-cooker, which in turn has the effect that the mixture which is formed cooks quickly. The formation of a thin layer also has the advantage of cooking the polenta in an optimum manner which favours gelatinization of the starch and at the same time ensures the microbiological safety of the polenta. From an organoleptic point of view the polenta has the organoleptic characteristics of a traditional polenta.

The turbo-cooker is operated for a time interval of between 1 and 3 minutes, preferably about 2 minutes, following which the cooked polenta is discharged from the opening 26.

The discharge opening 26 of the turbo-cooker 1 is associated with the doser 2 described above, for example by means of a pipe 7, mentioned above.

In a preferred embodiment, the discharge opening 26 of the turbo-cooker is associated with the air cooling means (not shown), where the polenta is heated to a temperature of 40°C or higher, for example 60°C, which means are in turn associated with the doser by means of a pipe 7.

The cooked polenta exiting from the turbo-cooker has, at about 85°C, a dynamic viscosity of 13.000 - 17.000 Pa.s, preferably about 15.000 Pa.s, measured with a rotational coaxial-cylinder rheometer. Moreover, at the specified temperature, it has a relative moisture of 70-80%.

The granules or flakes according to the present invention may be used to produce a frozen ready-made food packaging for thawing in a microwave oven, comprising a receptacle made of a microwave-permeable rigid material, containing a first frozen food component at the bottom and a second frozen food component having a substantially fluid consistency at a temperature higher than 0°C, and a closure element, wherein said first food component comprises the aforementioned frozen ready-made polenta according to the present invention.

In a preferred embodiment, the aforementioned first components comprises the frozen ready-made polenta according to the present invention and the second food component is a condiment, which is for example tomato-based.

Owing to the form and the dimensions of the granules or flakes of polenta according to the present invention, the packaging according to the present invention will be particularly convenient to use because the time for thawing the food components in a microwave oven will be particularly short. In addition, the organoleptic properties of the thawed product will be optimum.

Moreover, the food product will be particularly convenient because it does not require any action on the part of the user during the thawing and/or heating time: it is in fact not necessary to mix the polenta during this time.

At the end of the time for thawing and/or heating in a microwave oven, the user may remove the closure element, for example a film, and directly eat the product, if necessary after briefly mixing the contents.

The thawed and/or heated product will therefore consist of a soft polenta with a sauce arranged, for example, on its surface.

### EXAMPLE 1

### Preparation of a soft polenta

A composition of dry corn meal and salt was prepared in the proportions (% p/p) indicated below in Table 1.

**Table 1. Proportions of the components of the composition for preparation of a soft polenta**

| **Ingredient** | **% (p/p)** |
|---|---|
| Corn meal | 97 |
| Salt | 3 |
| Total | 100 |

A flow of the aforementioned composition indicated in the table above was fed to the turbo-cooker of the type described above at the same time as feeding of a flow of water heated mainly to 85°C. The respective flow rates of the two flows were regulated to obtain a polenta pre-mix inside the turbo-cooker formed by 29% corn meal, 68% water and 3% salt. The bladed rotor of the turbo-cooker was operated at a peripheral speed of 20 m/s for a cooking time of 90 seconds at a temperature of the inner wall of the turbo-cooker equal to 140°C.

At the end of cooking, the cooked polenta was discharged from the discharge opening 26.

The cooked polenta thus obtained had organoleptic characteristics comparable to those of a traditional polenta. In particular, the consistency was homogeneous and creamy.

The characteristics of the cooked polenta output from the turbo-cooker are summarised as follows in Table 2:

**Table 2. Characteristics of the polenta output from the turbo-cooker**

| **Parameter** | **Measurement at the temperature of 85°C** |
|---|---|
| Relative moisture (%) | 78% |
| Viscosity (Pa.s) | 15.000 |
| pH | 6.6 |

### EXAMPLE 2

### Production of granules of frozen ready-made polenta

The cooked polenta output from the turbo-cooker according to Example 1 was first air-cooled to a temperature of 60°C and then fed into a doser of the type described above.

In particular, using a perforated plate provided with circular through-holes having a 7 mm diameter, semifinished products of polenta in the form of beads with a diameter of about 8 mm were obtained, said beads falling by mean of gravity into a first deep-freezing section and in particular into a liquid nitrogen bath (at the temperature of -197°C).

The semifinished polenta products in the liquid nitrogen bath underwent rapid deep-freezing of the outer surface with consequent hardening thereof and the formation of partially deep-frozen granules having a frozen outer crust and a core which was not completely frozen.

Then the partially deep-frozen granules of polenta were collected on a conveyor belt partially immersed in the body of nitrogen.

Then, after remaining for about 20 seconds in the liquid nitrogen bath, by means of the conveyor belt, the partially frozen granules of polenta were removed from the liquid nitrogen bath and were fed into a second deep-freezing section at -65°C where, during the course of about 100 seconds, the deep-freezing was completed, obtaining completely frozen granules of polenta. Then the frozen granules of polenta were fed to a refining device of the granulator type.

In the granulator the frozen granules of polenta were transported by a screw feeder and pushed towards a grille having square-shaped through-holes with a width of 5 mm, obtaining at the outlet of the granulator frozen granules of polenta with an essentially homogeneous size, having the larger dimension of about 5 mm and weight of about 2.5 g. The frozen granules of polenta with an essentially homogeneous size were then packaged and stored using known procedures at a temperature of -25°C.

### EXAMPLE 3

### Production of granules of frozen ready-made polenta

The cooked polenta output from the turbo-cooker according to Example 1 was first air-cooled to a temperature of 40°C and then fed into a plant of the type described above for the production of frozen ready-made polenta.

In particular, using a plate provided with slots having a width of 2 mm and length of 15 mm, polenta flakes with a greater dimension of about 60 mm were obtained, said flakes falling by means of gravity into a first deep-freezing section and in particular into a liquid nitrogen bath (at a temperature of -197°C).

The polenta flakes in the liquid nitrogen bath underwent rapid deep-freezing of the outer surface with consequent hardening thereof and the formation of partially deep-frozen granules having a frozen outer crust and a core which was not completely frozen.

Then the partially deep-frozen granules of polenta were collected on a conveyor belt partially immersed in the nitrogen body.

Then, after remaining for about 15 seconds in the liquid nitrogen bath, by means of the conveyor belt, the partially frozen granules of polenta were removed from the liquid nitrogen bath and were fed into a second deep-freezing section at -65°C where, during the course of about 80 seconds, the deep-freezing was completed, obtaining completely frozen granules of polenta.

The deep-frozen flakes of polenta with an essentially homogeneous size were then packaged and stored using known procedures at a temperature of -25°C.

### EXAMPLE 4

### Preparation of the polenta

The packaged granules according to Example 2 were stored in a domestic freezer. 400 g of granules were poured into a container suitable for use in a microwave oven and covered with a lid, also suitable for use in a microwave oven.

The container was introduced into a microwave oven set to 800 W and heated for 4 minutes, with rotation of the oven plate, without interruption of the cooking time.

At the end of the cooking time, the container was extracted from the microwave oven and the lid was removed with care.

The contents had a homogeneously heated and boiling appearance. Upon stirring, the polenta had a homogeneous and creamy consistency.

Measurements of physical parameters of the polenta at a temperature of 85°C were carried out and are summarized in Table 3 below:

**Table 3. Characteristics of the prepared ready-made polenta**

| **Parameter** | **Measurement at the temperature of 85°C** |
|---|---|
| Relative moisture (%) | 78% |
| Viscosity (Pa.s) | 15.000 |
| pH | 6.6 |

A set of sensorial tests were prepared in order to compare the ready-made polenta according to the present invention with the polenta according to the prior art.

The polenta according to the prior art consisted of an instantaneous polenta, blocks of frozen polenta with dimensions of 70x70x20 mm and refrigerated blocks of polenta with dimensions of 150x80x30 mm, reduced to a viscous mixture by means of the addition of water and mixing.

8 tasters were employed and asked to give a score of 1 to 10 to the four samples of polenta for the following characteristics (where 1 is the lowest score and 10 the highest score): homogeneity, creaminess, fluidity, colour (from pale yellow to deep yellow), dimpled appearance, consistency when tasted, pleasantness of taste, and overall evaluation.

The following Table 4 summarizes the results obtained.

**Table 4. Results of the sensorial tests**

| | Instant polenta | Refrigerated polenta | Frozen polenta | Polenta according to Example 4 |
|---|---|---|---|---|
| Homogeneity | 6 | 4 | 4 | 6 |
| Creaminess | 6 | 1 | 1 | 7 |
| Fluidity | 6 | 1 | 1 | 6 |
| Dimpled appearance | 7 | 6 | 6 | 7 |
| Colour | 7 | 7 | 8 | 8 |
| Consistency when tasted | 8 | 7 | 7 | 8 |
| Pleasantness of taste | 8 | 7 | 7 | 8 |
| Overall evaluation | 7 | 6 | 6 | 7 |

### EXAMPLE 5

### Frozen food packaging

A packaging comprising a PET tray provided with a respective closing film was prepared. 250 g of polenta in the form of granules according to the present invention (Example 2) with a composition consisting of 68% water, 29% corn meal and 3% salt were placed on the bottom of the packaging. The granules had a greater dimension of about 5 mm and an average weight of about 2 g.

100 g of granules of a tomato-based sauce were placed on top of the polenta granules. The sauce granules had a substantially round form with an average diameter of about 10 mm and an average weight of about 2.5 g.

The packaging was then sealed with the aforementioned film and stored at freezing temperature.

After 24 hours, the packaging was extracted from the freezer and placed in a microwave oven at a power of 800 Watts for 4 minutes, without removing the film.

At the end of the thawing time, the packaging was extracted from the oven and the covering film was removed.

The polenta was homogeneous and well-heated. The organoleptic properties of the seasoned polenta were moreover optimum and comparable to those of a traditional polenta.

To conclude, the polenta in the form of granules or scales according to the present invention has the advantage that it may be easily divided into portions and the user is not constrained at the time of use by the dimensions of large blocks (when determining the size of the portions).

In other words, the user may use the exact quantity of polenta needed for the case in question, removing it from the package in a simple and quick manner, and put back the unused part inside the freezer.

Moreover, owing to the granule and flake form and in particular the small dimensions of the granules or flakes, thawing and/or heating of the polenta according to the invention is quick and uniform.

The heating process is in fact uniform and rapid and the organoleptic properties of the product resulting there from are therefore similarly uniform.

Advantageously, the time for thawing and/or heating a portion of the polenta according to the invention is less than 5 minutes and more preferably less than 4 minutes.

Advantageously, the polenta according to the invention may if necessary be thawed and/or heated in a microwave oven, pan, wok, steam oven, bain-marie, without being affected by the drawbacks due to a lack of uniformity in temperature.

The polenta according to the present invention has moreover the advantage that it may be prepared safely since there is no need to handle large volumes of hot water, not even in the case of catering services.

Furthermore, the polenta according to the invention, because of its versatility when dividing into portions, reduces the amount of waste since it is possible to use exactly the quantity required.

Moreover, the small dimensions of the granules or scales and their consequent short thawing and/or heating time reduces to a minimum any problem which may be caused by phase separation of the polenta during thawing thereof owing to the optional presence of ingredients with a high lipid content in the composition of the polenta.

Owing to the aforementioned characteristics, the polenta according to the present invention is suitable for use in various combinations and associations, allowing a great variation and personalization of the recipes. This advantage is even greater when one considers that it is not required to thaw the polenta beforehand, owing to the small dimensions of the granules or flakes, and that the granules or flakes may be directly removed from the freezer in the desired quantities without wastage.

The aforementioned advantages are considerable both on a domestic level and at a catering level.

For example, the granules of flakes of ready-made polenta may be distributed on a dish to be cooked in the oven, so as to form an (upper or intermediate) layer in a creative recipe.

According to another example, the ready-made polenta according to the invention may be associated in variable proportions with other ingredients such as vegetables, fish, meat, cheese or sauces so as to create polenta seasoned according to taste in a creative and imaginative manner where each granule or flake represents in its composition the entire dish.

Moreover, the polenta according to the present invention offers the advantage of being less bulky owing to the form and dimensions of the granules or flakes, with consequent lower transportation and storage costs.

Moreover, as regards the process according to the invention, it should be added that advantageously there is no need for pauses in order to clean and sterilize the surfaces of the devices used, these not being necessary either during deep-freezing of the polenta nor when changing recipes.

This is made possible by the nitrogen (or carbon dioxide) bath which has the advantageous effect of deep-freezing the outer layer of the polenta semifinished products before they are able to adhere to any surface of the deep-freezing sections, for example to the conveyor means, and therefore no undesirable effects such as the formation of films, crusts and the like occur since there is no contact with the polenta in the semi-fluid (or soft) state.

Moreover, in view of the very low temperatures, the operating conditions are practically aseptic.

Finally also the advantages mentioned above with regard to energy savings are worth remembering, these being made possible by the use of the liquid nitrogen (or carbon dioxide) vapours released in the first deep-freezing section in order to cool the second deep-freezing section.

A person skilled in the art may make numerous modifications to the deep-freezing process and devices, in the embodiments shown and described, in order to satisfy any specific requirements which may arise, all of these being contained within the scope of the invention, as defined by the claims provided below.

## Claims

1. A frozen ready-made polenta containing, by weight relative to the total weight of the polenta, 20-30% cereal flour, 70-80% water and 0-3% salt, in the form of frozen granules or flakes with a greater dimension comprised between 1 and 60 mm and having an average weight of 6.0 g or less, substantially homogeneous in size, said granules or flakes being able to be thawed and/or heated rapidly and uniformly to produce a soft polenta having the texture and organoleptic characteristics of a freshly cooked traditional polenta and a dynamic viscosity of 13.000 - 17.000 Pa.s, preferably about 15.000 (Pa.s), at about 85°C, measured with a rotational coaxial-cylinder rheometer, wherein said frozen granules or flakes are obtainable by a process that comprises the steps of:
a) providing a traditional soft polenta at a temperature of about 40°C or higher;
b) dividing said polenta into a plurality of semifinished products in the form of granules or flakes;
c) performing a first step of deep-freezing said semifinished products by supplying them in dosed amounts into a bath of a liquid at a temperature equal at -30°C or lower and keeping them in said bath for a predetermined first time interval, thus obtaining a plurality of partially deep-frozen granules or flakes of said polenta, said partially deep-frozen granules or flakes having a hard and deep-frozen external surface and a soft not completely deep-frozen core;
d) subjecting for a predetermined second time interval said plurality of partially deep-frozen granules or flakes of polenta to a second deep-freezing step at a temperature comprised between -90°C and -30°C, preferably between -70°C and - 50°C, thus obtaining a plurality of deep-frozen granules or flakes of polenta.

2. The frozen ready-made polenta in the form of frozen granules or flakes according to claim 1, wherein said greater dimension is comprised between 1 mm and 40 mm, preferably between 1 mm and 30 mm, more preferably between 1 mm and 15 mm.

3. The frozen ready-made polenta in the form of frozen granules or flakes according to claim 1 or 2, wherein said average weight is equal to or less than 5.0 g, preferably less than 4.0 g, more preferably less than 3.0 g.

4. The frozen ready-made polenta in the form of frozen granules or flakes according to any one of claims 1 to 3, wherein said cereal meal is selected from the group consisting of corn, wheat, oat, barley, millet, sorghum, buckwheat meal and is preferably corn meal.

5. The frozen ready-made polenta in the form of frozen granules or flakes according to claim 4, wherein said frozen granules or flakes further comprise one or more ingredients selected from the group comprising dairy products, meat, fish, vegetables, fruits, cereal grains, spices, flavouring and aromatic herbs.

6. The frozen ready-made polenta in the form of frozen granules or flakes according to any one of claims 1 to 5, wherein said predetermined first time interval of step
c) of the process by which said frozen granules or flakes are obtained has a duration comprised between 10 seconds and 90 seconds, preferably between 10 seconds and 60 seconds, and more preferably between 15 seconds and 30 seconds.

7. The frozen ready-made polenta in the form of frozen granules or flakes according to any one of claims 1 to 6, wherein said predetermined second time interval of step
d) of the process by which said frozen granules or flakes are obtained has a duration comprised between 30 seconds and 210 seconds, preferably between 30 seconds and 150 seconds, and more preferably between 45 seconds and 120 seconds.

8. The frozen ready-made polenta in the form of frozen granules or flakes according to any one of claims 1 to 7, wherein said liquid of step c) of the process by which said frozen granules or flakes are obtained is nitrogen and has a temperature comprised between -197°C and -150°C.

9. The frozen ready-made polenta in the form of frozen granules or flakes according to any one of claims 1 to 8, wherein said step d) of the process by which
said frozen granules or flakes are obtained is followed by a step e) of subjecting the deep-frozen granules or flakes thus obtained to a refining step, wherein at least some of said deep-frozen granules or flakes are reduced in size.

10. The frozen ready-made polenta in the form of frozen granules or flakes according to claim 9, wherein said step e) of the process by which said frozen granules or flakes are obtained is performed in a refining device arranged downstream of the second deep-freezing section and comprising a screw feeder and a perforated plate or grille removably associated with a terminal end of said screw feeder.

11. The frozen ready-made polenta in the form of frozen granules or flakes according to any one of claims 1 to 10, wherein, in the process by which said frozen granules or flakes are obtained,
- said step b) of dividing said polenta (A) into a plurality of semifinished products in the form of granules or flakes is carried out by means of a dosing device (2);
- said step c) of performing a first step of deep-freezing said semifinished products thus obtaining a plurality of partially deep-frozen granules or flakes (B) of said polenta is carried out in a first deep-freezing section (3) arranged downstream of said dosing device, comprising a bath (12) of a liquid kept at a temperature of - 30°C or lower, into which said semifinished products of said polenta are fed and from which said partially deep-frozen granules or flakes (C) of polenta which have a hard and deep-frozen external surface and a soft not completely deep-frozen core are discharged;
- said step d) of subjecting for a predetermined second time interval said plurality of partially deep-frozen granules or flakes of polenta to a second deep-freezing step, thus obtaining a plurality of deep-frozen granules or flakes of polenta, is carried out in a second deep-freezing section (4) arranged downstream of said first deep-freezing section (3), operating at a temperature comprised between -90°C and - 30°C, preferably between -70°C and -50°C, into which said partially deep-frozen granules (C) or flakes of polenta exiting said first deep-freezing section are fed, and from which deep-frozen granules or flakes (D) of polenta are discharged.

12. A method for the preparation of a soft polenta having optimum organoleptic properties comparable to those of a traditional polenta, wherein a portion of ready-made polenta in the form of deep-frozen granules or flakes according to any one of claims 1 to 11 is poured into a container and thawed and heated in a microwave oven or is poured into a pot and thawed and heated on a heat source for a predetermined thawing and cooking time, preferably without stirring during the thawing and heating time.

## Patentansprüche

1. Gefrorene, gebrauchsfertige Polenta, die, bezogen auf das Gesamtgewicht der Polenta, 20-30% Getreidemehl, 70-80% Wasser und 0-3% Salz enthält, in Form von gefrorenen Körnchen oder Flocken mit einer größeren Abmessung zwischen 1 und 60 mm und mit einem Durchschnittsgewicht von 6.0 g oder weniger, mit im Wesentlichen homogener Größe, wobei die Körnchen oder Flocken in der Lage sind, schnell und gleichmäßig aufgetaut und/oder erhitzt zu werden, um eine weiche Polenta mit der Textur und den organoleptischen Eigenschaften einer frisch gekochten traditionellen Polenta und einer dynamischen Viskosität von 13.000 - 17.000 Pa.s, vorzugsweise etwa 15.000 (Pa.s), bei etwa 85°C, gemessen mit einem Rotations-Koaxial-Zylinder-Rheometer, herzustellen, wobei die gefrorenen Körnchen oder Flocken durch ein Verfahren erhältlich sind, das die folgenden Schritte umfasst:
a) Bereitstellung einer traditionellen weichen Polenta bei einer Temperatur von etwa 40°C oder höher;
b) Aufteilen der Polenta in eine Vielzahl von halbfertigen Produkten in Form von Granulat oder Flocken;
c) Durchführen eines ersten Schritts des Tiefgefrierens der halbfertigen Produkte, indem sie in dosierten Mengen in ein Bad mit einer Flüssigkeit bei einer Temperatur von mindestens -30°C oder niedriger eingebracht werden und sie in dem Bad für ein vorbestimmtes erstes Zeitintervall gehalten werden, wodurch eine Vielzahl von teilweise tiefgefrorenen Körnchen oder Flocken der Polenta erhalten wird, wobei die teilweise tiefgefrorenen Körnchen oder Flocken eine harte und tiefgefrorene äußere Oberfläche und einen weichen, nicht vollständig tiefgefrorenen Kern aufweisen;
d) Unterziehen der Vielzahl von teilweise tiefgefrorenen Körnchen oder Flocken von Polenta für ein vorbestimmtes zweites Zeitintervall einem zweiten Tiefkühlschritt bei einer Temperatur zwischen -90°C und -30°C, vorzugsweise zwischen -70°C und - 50°C, wodurch eine Vielzahl von tiefgefrorenen Körnchen oder Flocken von Polenta erhalten wird.

2. Gefrorene, gebrauchsfertige Polenta in Form von gefrorenen Körnchen oder Flocken nach Anspruch 1, wobei die größere Abmessung zwischen 1 mm und 40 mm, vorzugsweise zwischen 1 mm und 30 mm, noch bevorzugter zwischen 1 mm und 15 mm liegt.

3. Gefrorene, gebrauchsfertige Polenta in Form von gefrorenen Körnchen oder Flocken nach Anspruch 1 oder 2, wobei das Durchschnittsgewicht gleich oder weniger als 5,0 g, vorzugsweise weniger als 4,0 g, besonders bevorzugt weniger als 3,0 g ist.

4. Gefrorene, gebrauchsfertige Polenta in Form von gefrorenen Körnchen oder Flocken nach einem der Ansprüche 1 bis 3, wobei das Getreidemehl aus der Gruppe ausgewählt ist, die aus Mais-, Weizen-, Hafer-, Gersten-, Hirse-, Sorghum- und Buchweizenmehl besteht, und vorzugsweise Maismehl ist.

5. Gefrorene, gebrauchsfertige Polenta in Form von gefrorenen Körnchen oder Flocken nach Anspruch 4, wobei die gefrorenen Körnchen oder Flocken ferner eine oder mehrere Zutaten umfassen, die aus der Gruppe ausgewählt sind, die Milchprodukte, Fleisch, Fisch, Gemüse, Früchte, Getreidekörner, Gewürze, Geschmacksstoffe und aromatische Kräuter umfasst.

6. Gefrorene, gebrauchsfertige Polenta in Form von gefrorenen Körnchen oder Flocken nach einem der Ansprüche 1 bis 5, wobei das vorbestimmte erste Zeitintervall von Schritt c) des Verfahrens, durch das die gefrorenen Körnchen oder Flocken erhalten werden, eine Dauer hat, die zwischen 10 Sekunden und 90 Sekunden, vorzugsweise zwischen 10 Sekunden und 60 Sekunden und besonders bevorzugt zwischen 15 Sekunden und 30 Sekunden liegt.

7. Gefrorene, gebrauchsfertige Polenta in Form von gefrorenen Körnchen oder Flocken nach einem der Ansprüche 1 bis 6, wobei das vorbestimmte zweite Zeitintervall von Schritt d) des Verfahrens, durch das die gefrorenen Körnchen oder Flocken erhalten werden, eine Dauer hat, die zwischen 30 Sekunden und 210 Sekunden, vorzugsweise zwischen 30 Sekunden und 150 Sekunden und besonders bevorzugt zwischen 45 Sekunden und 120 Sekunden liegt.

8. Gefrorene, gebrauchsfertige Polenta in Form von gefrorenen Körnchen oder Flocken nach einem der Ansprüche 1 bis 7, wobei die Flüssigkeit von Schritt c) des Verfahrens, durch das die gefrorenen Körnchen oder Flocken erhalten werden, Stickstoff ist und eine Temperatur zwischen -197°C und -150°C aufweist.

9. Gefrorene, gebrauchsfertige Polenta in Form von gefrorenen Körnchen oder Flocken nach einem der Ansprüche 1 bis 8, wobei dem Schritt d) des Verfahrens, durch den die gefrorenen Körnchen oder Flocken erhalten werden, ein Schritt e) folgt, in dem die so erhaltenen tiefgefrorenen Körnchen oder Flocken einem Verfeinerungsschritt unterworfen werden, in dem zumindest einige der tiefgefrorenen Körnchen oder Flocken in ihrer Größe reduziert werden.

10. Gefrorene, gebrauchsfertige Polenta in Form von gefrorenen Körnchen oder Flocken nach Anspruch 9, wobei der Schritt e) des Verfahrens, durch den die gefrorenen Körnchen oder Flocken erhalten werden, in einer Raffiniervorrichtung durchgeführt wird, die stromabwärts des zweiten Tiefkühlabschnitts angeordnet ist und eine Schneckenzuführung und ein perforiertes Blech oder Gitter umfasst, das abnehmbar mit einem Anschlussende der Schneckenzuführung verbunden ist.

11. Gefrorene, gebrauchsfertige Polenta in Form von gefrorenen Körnchen oder Flocken nach einem der Ansprüche 1 bis 10, **dadurch gekennzeichnet, dass** bei dem Verfahren, durch das die gefrorenen Körnchen oder Flocken erhalten werden,
- Schritt b) des Aufteilens der Polenta (A) in eine Vielzahl von halbfertigen Produkten in Form von Körnchen oder Flocken mittels einer Dosiervorrichtung (2) durchgeführt wird;
- Schritt c) des Durchführens eines ersten Schritts des Tiefgefrierens der halbfertigen Produkte, wodurch eine Vielzahl von teilweise tiefgefrorenen Körnchen oder Flocken (B) der Polenta erhalten wird, in einem ersten Tiefkühlabschnitt (3) durchgeführt wird, der stromabwärts der Dosiervorrichtung angeordnet ist, umfassend ein Bad (12) einer auf einer Temperatur von -30°C oder niedriger gehaltenen Flüssigkeit, in das die halbfertigen Produkte der Polenta eingespeist werden und aus dem die teilweise tiefgefrorenen Körnchen oder Flocken (C) der Polenta, die eine harte und tiefgefrorene äußere Oberfläche und einen weichen, nicht vollständig tiefgefrorenen Kern aufweisen, ausgetragen werden;
- Schritt d), bei dem die Vielzahl von teilweise tiefgefrorenen Körnchen oder Flocken der Polenta für ein vorbestimmtes zweites Zeitintervall einem zweiten Tiefkühlschritt unterzogen wird, wodurch eine Vielzahl von tiefgefrorenen Körnchen oder Flocken der Polenta erhalten wird, in einem zweiten Tiefkühlabschnitt (4) durchgeführt wird, der stromabwärts des ersten Tiefkühlabschnitts (3) angeordnet ist, der bei einer Temperatur zwischen -90°C und -30°C, vorzugsweise zwischen -70°C und -50°C, arbeitet, in den die teilweise tiefgefrorenen Körnchen (C) oder Flocken der Polenta, die den ersten Tiefkühlabschnitt verlassen hat, eingespeist werden, und aus dem die tiefgefrorenen Körnchen oder Flocken (D) von Polenta ausgetragen werden.

12. Verfahren zur Herstellung einer weichen Polenta mit optimalen organoleptischen Eigenschaften, die mit denen einer traditionellen Polenta vergleichbar sind, wobei eine Portion gebrauchsfertiger Polenta in Form von tiefgefrorenen Körnchen oder Flocken nach einem der Ansprüche 1 bis 11 in einen Behälter gegossen und in einem Mikrowellenofen aufgetaut und erhitzt wird oder in einen Topf gegossen und aufgetaut und auf einer Wärmequelle für eine vorbestimmte Auftau- und Kochzeit erhitzt wird, vorzugsweise ohne Rühren während der Auftau- und Erhitzungszeit.

## Revendications

1. Polenta préparée congelée contenant, en poids par rapport au poids total de la polenta, 20-30% de farine de céréales, 70-80% d'eau et 0-3% de sel, sous forme de granulés ou de flocons congelés ayant une plus grande dimension comprise entre 1 et 60 mm et un poids moyen de 6,0 g ou moins, de taille sensiblement homogène, lesdits granulés ou flocons étant susceptibles d'être décongelés et/ou réchauffés rapidement et uniformément pour produire une polenta moelleuse ayant la texture et les caractéristiques organoleptiques d'une polenta traditionnelle fraîchement cuisinée et une viscosité dynamique de 13,000 - 17,000 Pa.s, de préférence d'environ 15,000 (Pa.s), à environ 85°C, mesurée à l'aide d'un rhéomètre rotatif à cylindres coaxiaux, dans laquelle lesdits granulés ou flocons congelés peuvent être obtenus par un procédé qui comprend les étapes consistant à :
a) partir d'une polenta moelleuse traditionnelle à une température d'environ 40°C ou plus ;
b) diviser ladite polenta en une pluralité de produits semi-finis sous forme de granulés ou de flocons ;
c) procéder à une première étape de surgélation desdits produits semi-finis en les introduisant en quantités dosées dans un bain d'un liquide à une température égale à -30°C ou moins et en les gardant dans ledit bain pendant un premier intervalle de temps prédéterminé, obtenant ainsi une pluralité de granulés ou flocons partiellement surgelés de ladite polenta, lesdits granulés ou flocons partiellement surgelés ayant une surface externe dure et surgelée et un cœur mou, pas complètement surgelé ;
d) soumettre ladite pluralité de granulés ou flocons de polenta partiellement surgelés à une seconde étape de surgélation à une température comprise entre -90°C et -30°C, de préférence entre -70°C et -50°C, pendant un deuxième intervalle de temps prédéterminé, obtenant ainsi une pluralité de granulés ou flocons de polenta surgelés.

2. Polenta préparée congelée sous forme de granulés ou flocons congelés selon la revendication 1, dans laquelle ladite plus grande dimension est comprise entre 1 mm et 40 mm, de préférence entre 1 mm et 30 mm, plus préférablement entre 1 mm et 15 mm.

3. Polenta préparée congelée sous forme de granulés ou flocons congelés selon la revendication 1 ou 2, dans laquelle ledit poids moyen est inférieur ou égal à 5,0 g, de préférence inférieur à 4,0 g, plus préférablement inférieur à 3,0 g.

4. Polenta préparée congelée sous forme de granulés ou flocons congelés selon l'une quelconque des revendications 1 à 3, dans laquelle ladite farine de céréales est choisie dans le groupe constitué par la farine maïs, de blé, d'avoine, d'orge, de millet, de sorgho, de sarrasin et est, de préférence, de la farine de maïs.

5. Polenta préparée congelée sous forme de granulés ou flocons congelés selon la revendication 4, dans laquelle lesdits granulés ou flocons congelés comprennent en outre un ou plusieurs ingrédients choisis dans le groupe comprenant les produits laitiers, la viande, le poisson, les légumes, les fruits, les grains de céréales, les épices, les arômes et les herbes aromatiques.

6. Polenta préparée congelée sous forme de granulés ou flocons congelés selon l'une quelconque des revendications 1 à 5, où ledit premier intervalle de temps prédéterminé de l'étape c) du procédé par lequel lesdits granulés ou flocons congelés sont obtenus a une durée comprise entre 10 secondes et 90 secondes, de préférence entre 10 secondes et 60 secondes, et plus préférablement entre 15 secondes et 30 secondes.

7. Polenta préparée congelée sous forme de granulés ou flocons congelés selon l'une quelconque des revendications 1 à 6, où ledit second intervalle de temps prédéterminé de l'étape d) du procédé par lequel lesdits granulés ou flocons congelés sont obtenus a une durée comprise entre 30 secondes et 210 secondes, de préférence entre 30 secondes et 150 secondes, et plus préférablement entre 45 secondes et 120 secondes.

8. Polenta préparée congelée sous forme de granulés ou flocons congelés selon l'une quelconque des revendications 1 à 7, où ledit liquide de l'étape c) du procédé par lequel lesdits granulés ou flocons congelés sont obtenus est de l'azote et a une température comprise entre -197°C et -150°C.

9. Polenta préparée congelée sous forme de granulés ou flocons congelés selon l'une quelconque des revendications 1 à 8, où ladite étape d) du procédé par lequel lesdits granulés ou flocons congelés sont obtenus est suivie d'une étape e) qui consiste à soumettre les granulés ou flocons surgelés ainsi obtenus à une étape de raffinage, où au moins une partie desdits granulés ou flocons surgelés sont réduits en taille.

10. Polenta préparée congelée sous forme de granulés ou flocons congelés selon la revendication 9, où ladite étape e) du procédé par lequel lesdits granulés ou flocons congelés sont obtenus est réalisée dans un dispositif de raffinage disposé en aval du second compartiment de surgélation et comprenant un alimentateur à vis et une plaque ou une grille perforée associée de manière amovible à une extrémité terminale dudit alimentateur à vis.

11. Polenta préparée congelée sous forme de granulés ou flocons congelés selon l'une quelconque des revendications 1 à 10, où, dans le procédé par lequel lesdits granulés ou flocons congelés sont obtenus,
- ladite étape b) qui consiste à diviser ladite polenta (A) en une pluralité de produits semi-finis sous forme de granulés ou de flocons est réalisée au moyen d'un dispositif doseur (2) ;
- ladite étape c) qui consiste à effectuer une première étape de surgélation desdits produits semi-finis, obtenant ainsi une pluralité de granulés ou de flocons partiellement surgelés (B) de ladite polenta, est réalisée dans un premier compartiment de surgélation (3) disposé en aval dudit dispositif doseur, comprenant un bain (12) d'un liquide maintenu à une température de -30°C ou moins, dans lequel lesdits produits semi-finis de ladite polenta sont introduits et à partir duquel lesdits granulés ou flocons partiellement surgelés (C) de la polenta, qui ont une surface externe dure et surgelée et un cœur mou pas complètement surgelé, sont évacués ;
- ladite étape d), qui consiste à soumettre, pendant un deuxième intervalle de temps prédéterminé, ladite pluralité de granulés ou flocons de polenta partiellement surgelés à une seconde étape de surgélation, obtenant ainsi une pluralité de granulés ou flocons de polenta surgelés, est réalisée dans un second compartiment de surgélation (4) disposé en aval dudit premier compartiment de surgélation (3), fonctionnant à une température comprise entre -90°C et -30°C, de préférence entre -70°C et -50°C, dans lequel lesdits granulés (C) ou flocons de polenta partiellement surgelés, sortant dudit premier compartiment de surgélation, sont introduits, et à partir duquel les granulés ou flocons (D) de polenta surgelés sont évacués.

12. Procédé pour la préparation d'une polenta moelleuse ayant des propriétés organoleptiques optimales comparables à celles d'une polenta traditionnelle, dans lequel une portion de la polenta préparée sous forme de granulés ou flocons surgelés selon l'une quelconque des revendications 1 à 11 est versée dans un récipient, et décongelée et réchauffée dans un four micro-ondes, ou est versée dans une marmite et décongelée et réchauffée sur une source de chaleur pendant un temps de décongélation et de cuisson prédéterminé, de préférence sans remuer pendant le temps de décongélation et de chauffage.
